# EUROPÄISCHE PATENTANMELDUNG

(11) **EP 0 681 977 A2**
(43) Veröffentlichungstag der Anmeldung: **15.11.1995**
(21) Anmeldenummer: 95105278.6
(22) Anmeldetag: 07.04.1995
(51) Int. Cl.: B65H 35/00

(54) **Folienspender für Haushaltsfolien**

(30) Priorität: 14.05.1994 DE 9408030 U
(71) Anmelder: MELITTA HAUSHALTSPRODUKTE GmbH & Co. Kommanditgesellschaft, D-32427 Minden (DE)
(72) Erfinder: Hörnlein, Reinhard, D-37603 Holzminden (DE)
(74) Vertreter: Stracke, Alexander, Dipl.-Ing.

(57) **Zusammenfassung**

Der Folienspender ist zylinderförmig ausgebildet und setzt sich aus einem aufklappbaren Gehäuseteil (2), einem Fußgehäuseteil (3) und aus Endkappen zusammen. Die Gehäuseteile überlappen sich, wobei in dem Überlappungsbereich die Folienfahne der vom Gehäuse aufgenommenen Folienrolle durch elastische Gehäusekräfte gehalten wird. Die Außenkante des aufklappbaren Gehäuseteils (2) ist als Griffleiste (11) gestaltet. Das Fußgehäuseteil (3) weist zwei in Abstand voneinander angeordnete Fußstege (13) auf. Die Griffleiste und die Fußstege erstrecken sich über die gesamte Länge des Folienspenders.

Die freie Kante des Fußgehäuseteils ist als Wulstrand ausgebildet, auf den sich die Innenfläche des Gehäuseteils (2) bei verschlossenem Gehäuse auflegt. Im Überlappungsbereich ist zwischen den Gehäuseteilen ein Spaltraum (10) vorhanden, durch den die Folie nach außen geführt wird.

## Beschreibung

Die Erfindung bezieht sich auf einen Folienspender für Haushaltsfolien mit einem aus zwei schalenartigen Gehäuseteilen bestehenden Gehäuse zur Aufnahme einer Folienrolle, wobei die Gehäuseteile an ihren einen Längskanten gelenkig miteinander verbunden sind und sich an ihren anderen Längsseiten in einem Winkel bereich überlappen und in diesem Überlappungsbereich die Folienfahne durch elastische Gehäusekräfte gehalten wird.

Es ist ein Folienspender dieser Art bekannt (EP 0 511 505 A1), bei dem das Gehäuse zur Aufnahme einer Folienrolle zylinderförmig gestaltet ist und abgelegt auf einer geneigten Fläche wegrollt. Es kommt hinzu, daß das Aufklappen des einen Gehäuseteils Schwierigkeiten bereiten kann, da die sich überlappenden Gehäuseteile kraftschlüssig aneinanderliegen und keine Hilfsmittel für das Aufklappen vorgesehen sind.

Der Erfindung liegt die Aufgabe zugrunde, den Folienspender der eingangs genannten Art so zu gestalten, daß seine Handhabung erleichtert wird.

Nach der Erfindung wird diese Aufgabe dadurch gelöst, daß die Außenkante des aufklappbaren Gehäuseteils als Griffleiste ausgebildet ist und das andere Fußgehäuseteil zwei in Abstand voneinander angeordnete Fußstege aufweist.

Durch die Griffleiste wird das Aufklappen des einen Gehäuseteils und das Verschließen des Gehäuses durch ein Bewegen des genannten Gehäuseteils in eine teilweise überlappende Lage mit dem Fußgehäuseteil wesentlich erleichtert. Die Fußstege geben dem abgestellten Folienspender einen sicheren Halt.

Weitere Ausgestaltungen der Erfindung ergeben sich aus den Unteransprüchen.

Ausführungsbeispiele des erfindungsgemäßen Folienspenders sind in den Zeichnungen dargestellt und werden im folgenden beschrieben.

Es zeigen:
- Fig. 1: einen Folienspender im Längsschnitt mit einer ausgefahrenen Endkappe,
- Fig. 2: eine Ansicht in Richtung des Pfeiles II in Fig. 1 unter Weglassung der linken Endkappe,
- Fig. 3: die Ausführung nach der Fig. 2 mit weggeschwenktem Gehäuseteil,
- Fig. 4: eine weitere Ausführungsform eines Folienspenders im Längsschnitt,
- Fig. 5: einen Schnitt nach der Linie V-V in Fig. 4,
- Fig. 6: ein weiteres Ausführungsbeispiel eines Folienspenders im Längsschnitt,
- Fig. 7: eine Ansicht in Richtung des Pfeiles VII in Fig. 6,
- Fig. 8: eine weitere Abwandlungsform eines Folienspenders im Aufriß und teilweise geschnitten,
- Fig. 9: eine Ansicht in Richtung des Pfeiles in Fig. 8 unter Weglassung der linken Endkappe,
- Fig. 10: eine weitere Ausführungsform im Aufriß,
- Fig. 11: eine Ansicht in Richtung des Pfeiles XI in Fig. 10 unter Weglassung der linken Endkappe,
- Fig. 12: eine weitere Ausführungsform eines Folienspenders im Aufriß,
- Fig. 13: eine Ansicht in Richtung des Pfeiles XIII in Fig. 12 unter Weglassung der linken Endkappe,
- Fig. 14: die Ausführungsform nach der Fig. 13 mit weggeklapptem Gehäuseteil,
- Fig. 15: einen Folienspender im Querschnitt, bei dem die Folie über eine Rolle in den Überlappungsbereich zwischen den beiden Gehäuseteilen eingeführt wird,
- Fig. 16: eine Endkappe für den Folienspender nach der Fig. 15 im Aufriß und
- Fig. 17: den mit der Endkappe nach der Fig. 16 ausgestatteten Folienspender im Längsschnitt
- Fig. 18 und 19: weitere Ausführungsbeispiele eines Folienspenders.

Das Gehäuse 1 des Folienspenders für Haushaltsfolien, das zylinderförmig ausgebildet ist, setzt sich aus einem aufklappbaren Gehäuseteil 2, einem Fußgehäuseteil 3 und aus den Endkappen 4 und 5 zusammen. Die Gehäuseteile 2 und 3 sind an Längskanten 6 und 7 durch ein Filmscharnier 8 gelenkig miteinander verbunden. Die freie Kante des Fußgehäuseteils 3 ist als Wulstrand 9 ausgebildet, auf den sich die Innenfläche des Gehäuseteils 2 bei verschlossenem Gehäuse auflegt.

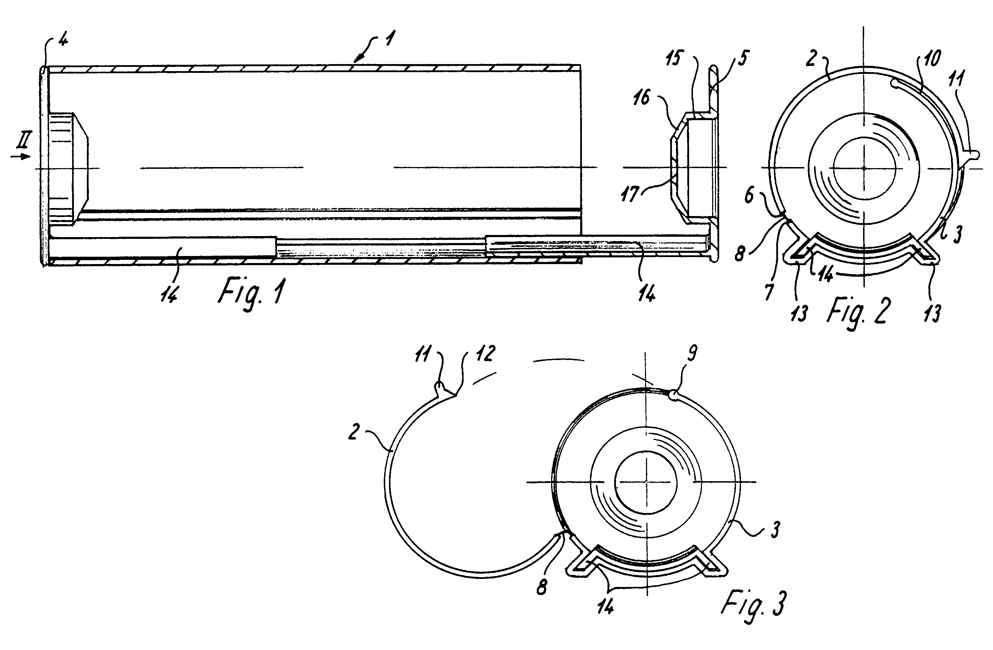

Aus der Fig. 2 ergibt sich, daß bei verschlossenem Gehäuse das Gehäuseteil 2 das Fußgehäuseteil 3 teilweise überlappt und im Überlappungsbereich zwischen den Gehäuseteilen ein Spaltraum 10 vorhanden ist, durch den die Folie nach außen geführt wird. Die Gehäuseteile 2 und 3 stützen sich im Überlappungsbereich kraftschlüssig aneinander ab.

Die freie Außenkante des aufklappbaren Gehäuseteils 2 ist als Griffleiste 11 ausgebildet, die sich ebenso wie der Wulstrand 9 und das Filmascharnier 8 über die gesamte Gehäuselänge erstreckt. Diese Griffleiste 11 weist in dem in den Fig. 2 und 3 aufgezeigten Ausführungsbeispiel eine Abreißkante 12 für die Folie auf.

Das Fußgehäuseteil 3 ist mit Fußstegen 13 ausgerüstet, die sich, da die Gehäuseteile im Strangpreßverfahren gefertigt werden, über die gesamte Gehäuselänge erstrecken. In dem dargestellten Ausführungsbeispiel sind die Fußstege 13 als zur Innenseite und zur Stirnweite des Folienspenders geöffnete Hohlstege ausgebildet. In die Hohlstege sind beim Ausführungsbeispiel nach den Fig. 1 bis 3 Führungsleisten 14 des Befestigungsfußes der Endkappen 4,5 eingeschoben. Der Befestigungsfuß ist mit mindestens einem Rastmittel versehen, das in eine Rastaussparung des Fußgehäuseteils eingreift.

Die Endkappen 4 und 5 weisen ferner Hohlzapfen 15 auf, die mit einem Konus 16 ausgerüstet sind und in das mittige Rohr der Folienrolle eingreifen, wobei die Rolle unter Spannung gehalten wird.

Der Boden 17 des Hohlzapfens kann mit einem Griffloch ausgerüstet sein. Bei dem Ausführungsbeispiel nach den Fig. 1 bis 3 besteht somit die Möglichkeit zum Einlegen einer neuen Folienrolle nach dem Aufklappen des Gehäuseteils 2 zumindest eine Endkappe in Richtung der Längsachse des Gehäuses nach außen zu bewegen.

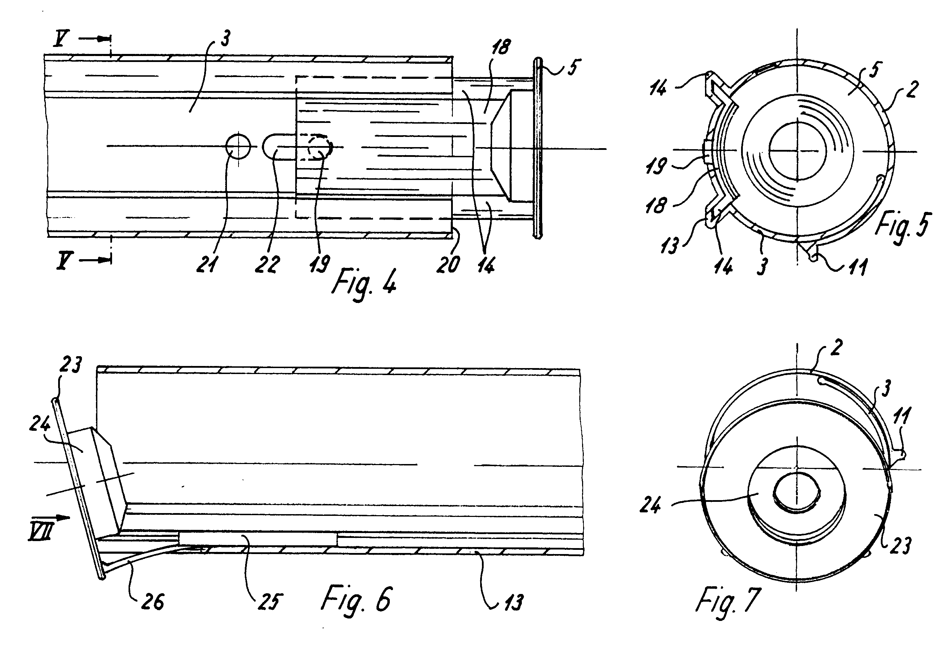

Bei dem Ausführungsbeispiel nach den Fig. 4 und 5 ist der mit den Führungsleisten 14 ausgerüstete Befestigungsfuß 18 der Endkappe 5 mit einem Zapfen 19 ausgerüstet, der bei der Anlage der Endkappe 5 an der Stirnfläche 20 des Gehäuses in eine Bohrung 21 des Fußgehäuseteils 3 eingreift. In der Stellung zum Einlegen einer neuen Folienrolle ist der Zapfen 19, wie in der Fig. 4 dargestellt, in einem Langloch 22 des Fußgehäuseteils 3 bewegbar.

Bei dem Ausführungsbeispiel nach den Fig. 6 und 7 kann, wie in den Figuren dargestellt, zum Einlegen einer neuen Folienrolle die Endkappe 23 in eine Schräglage gebracht werden, in der der Hohlzapfen 24 die Folienrolle freigibt. Zu diesem Zweck sind die in den Hohlraum der Fußstege 13 einführbaren Führungsleisten 25 über ein elastisch federndes Formteil 26 mit der Endkappe 23 verbunden. Im Bodenbereich des Fußgehäuseteils und der Fußstege 13 ist für die Bewegung des elastisch verformbaren Formteils 26 der entsprechende Freiraum vorhanden.

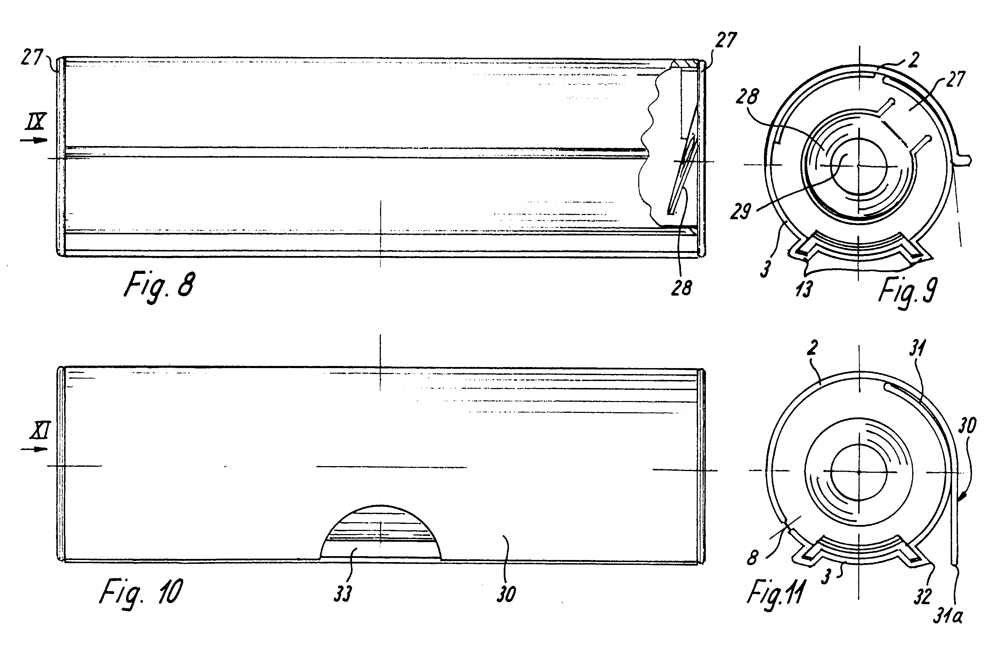

Bei dem Folienspender nach den Fig. 8 und 9 sind die Endkappen 27 mit einem Formteil 28 ausgerüstet, das mit der Endkappe einstückig ist und form- und materialelastisch ausgebildet ist. Dieses Formteil 28 greift in die mittige rohrförmige Öffnung der Folienrolle ein und hält die Folienrolle unter Vorspannung. Das Formteil 28 ist mit einem mittigen Griffloch 29 ausgerüstet und kann vor der Entnahme der Folienrolle in eine Lage bewegt werden, die mit der Lage der Endscheibe der Endkappe 27 fluchtet.

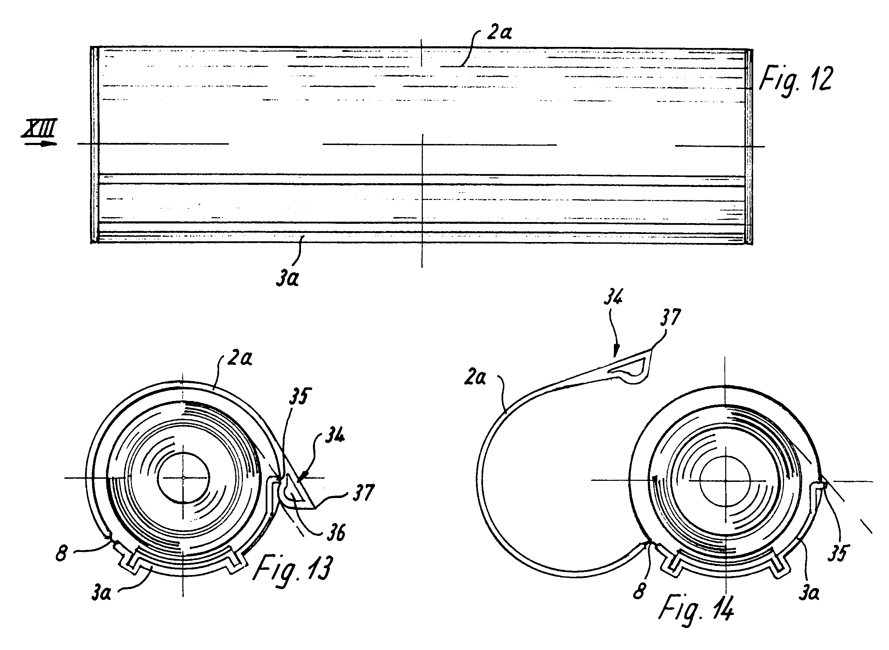

Bei der Ausführungsform des Folienspenders nach den Fig. 10 und 11 ist das aufklappbare Gehäuseteil 2 mit einer Schürze 30 ausgerüstet, die eine Tangente an das Fußgehäuseteil 3 bildet. Diese Schürze 30 erstreckt sich vom Überlappungsbereich 31 zwischen den beiden Gehäuseteilen. Die freie Kante 31a der Schürze bildet mit dem benachbarten Bereich eine Griffleiste, durch die in einfacher Weise das Gehäuseteil 2 in die aufgeklappte Stellung und von der aufgeklappten Stellung in die Verschlußstellung bewegt werden kann. Der der Schürze benachbarte Fußsteg ist mit einer Abreißkante 32 ausgerüstet, so daß die nach dem Abreißvorgang herabhängende Folienfahne durch die Schürze 30 geschützt wird.

Aus der Fig. 10 ergibt sich, daß die Schürze zweckmäßigerweise mit einer Eingriffsöffnung 33 versehen wird, die ein Ergreifen der Folienfahne zum Herausziehen eines Folienstücks aus dem Gehäuse erleichtert.

Bei dem Ausführungsbeispiel nach den Fig. 12 bis 14 sind die Gehäuseteile 2a und 3a ebenfalls wie bei den beschriebenen Folienspendern durch ein Filmscharnier 8 gelenkig miteinander verbunden. Das aufklappbare Gehäuseteil 2a ist mit einer Griffleiste 34 ausgerüstet, die die Kante 35 des Gehäuseteils 3a in der Verschlußstellung des Gehäuses rastend hintergreift. Die Griffleiste ist in dem dargestellten Ausführungsbeispiel mit einem Hohlraum 36 versehen und ist mit einer Abreißkante 37 ausgerüstet.

In der Verschlußstellung entsprechend der Darstellung in der Fig. 13 hintergreift die Griffleiste 34 die Kante 35 des Gehäuseunterteils 3a aufgrund der Material- und Formfederung des Gehäuseteils 2a so intensiv, daß diese Verbindung auch beim Abreißen eines Folienstücks unter Verwendung der Abreißkante 37 nicht gelöst wird. Zum Herausziehen der Folie wird das Gehäuseteil 3a mit einer Hand deformiert und gibt die Folie frei.
Zusätzlich zu der Abreißkante 37 kann auch an dem benachbarten Fußsteg eine Abreißkante vorgesehen werden.

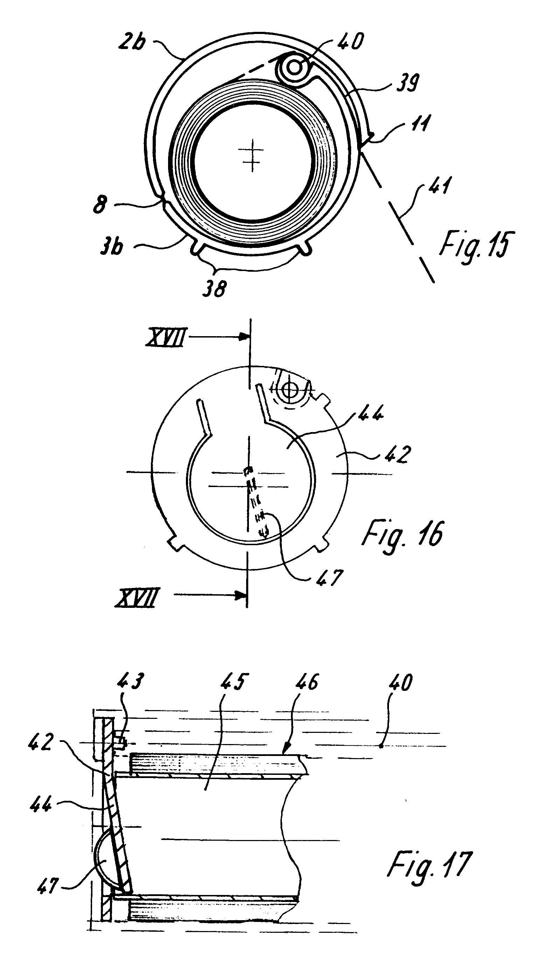

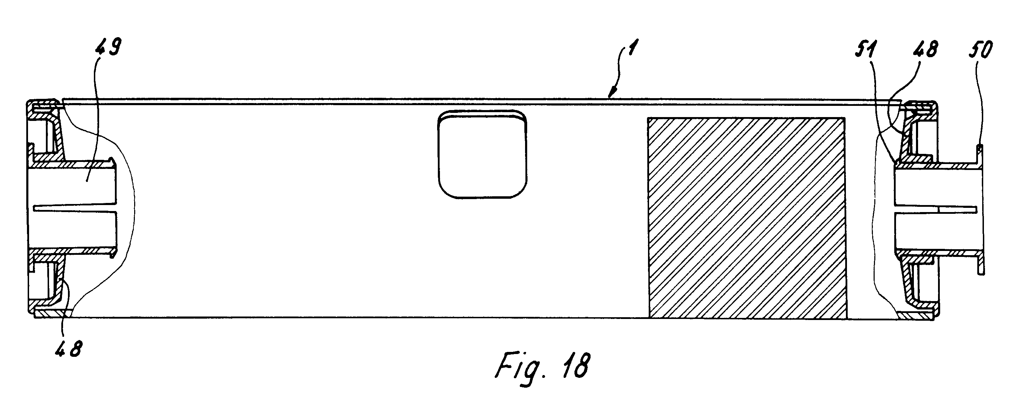

Bei dem Folienspender nach den Fig. 15 bis 17 sind die Fußstege 38 des Fußgehäuseteils 3b nicht als Hohlstege sondern als Vollmaterialstege ausgebildet. Das aufklappbare Gehäuseteil 2b ist ebenfalls über ein Filmscharnier 8 gelenkig mit dem Gehäuseteil 3b verbunden. Aus der Fig. 15 ergibt sich, daß sich die beiden Gehäuseteile in der in dieser Figur aufgezeigten Verschlußstellung teilweise überlappen und einen Überlappungsbereich 39 bilden. Die Innenkante dieses Überlappungsbereichs wird durch eine Rolle 40 gebildet, über die die Folie 41 schonend abgezogen wird. Zur Lagerung der Rolle 40 sind an den Endkappen 42 Lagerzapfen 43 vorgesehen. Die Endkappen sind in dem dargestellten Ausführungsbeispiel mit einem federnden Formteil 44 ausgerüstet, das in das Innenrohr 45 der Folienrolle 46 eingreift, wie dies in der Fig. 17 dargestellt ist. Zum Herausziehen des Formteils 44 aus dem Innenrohr 45 ist das Formteil mit einer Grifflasche 47 ausgerüstet.

Bei dem Folienspender nach der Fig. 18 ist mittig in jeder Endkappe 48 ein zylindrischer Rollenhalter 49 vorgesehen, der auf der linken Seite in eingefahrener Endstellung und auf der rechten Seite in ausgefahrener, geöffneter Stellung aufgezeigt ist. Die eingefahrene Stellung wird durch eine Raste gesichert. Die Rollenhalter weisen außen einen Ringflansch 50 und innen einen Anschlagbund 51 auf.

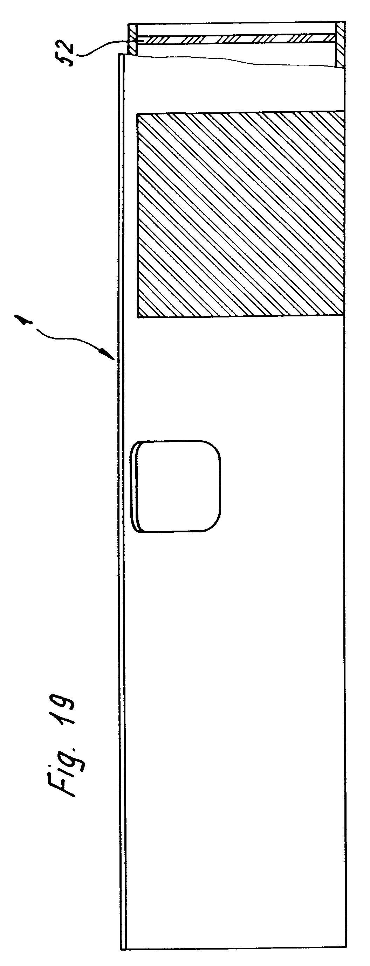

Bei den Folienspendern nach der Fig. 19 sind die Endkappen als Scheiben 52 ausgebildet, die am Umfang an mehreren Stellen mit dem Gehäuse verrastet sind.

## Patentansprüche

1. Folienspender für Haushaltsfolien mit einem aus zwei schalenartigen Gehäuseteilen bestehenden Gehäuse zur Aufnahme einer Folienrolle, wobei die Gehäuseteile an ihren einen Längskanten gelenkig miteinander verbunden sind und sich an ihren anderen Längsseiten in einem Winkelbereich überlappen und in diesem Überlappungsbereich die Folienfahne durch elastische Gehäusekräfte gehalten wird, **dadurch gekennzeichnet,** daß die Außenkante des aufklappbaren Gehäuseteils (2,2a,2b) als Griffleiste (11,34) ausgebildet ist und das andere Fußgehäuseteil (3,3a,3b) zwei in Abstand voneinander angeordnete Fußstege (13,38) aufweist.

2. Folienspender nach Anspruch 1, dadurch gekenneichnet, daß die Griffleiste (11,34) und die Fußstege (13,38) sich über die gesamte Länge des Folienspenders erstrecken.

3. Folienspender nach Anspruch 1, dadurch gekennzeichnet, daß die Griffleiste (11) die freie Endkante des Überlappungsbereichs der Gehäuseteile (2,3) bildet.

4. Folienspender nach einem der Ansprüche 1 bis 3, dadurch gekennzeichnet, daß die Griffleiste (11,34) mit einer Abreißkante (12,37) ausgerüstet ist.

5. Folienspender nach Anspruch 4, dadurch gekennzeichnet, daß die Griffleiste (34) als Hohlleiste ausgebildet ist und rastend die freie Außenkante (35) des Fußgehäuseteils (3a) hintergreift.

6. Folienspender nach Anspruch 1, dadurch gekennzeichnet, daß das aufklappbare Gehäuseteil (2) den Überlappungsbereich mit dem Fußgehäuseteil (3) überragend eine Schürze (30) bildet.

7. Folienspender nach Anspruch 6, dadurch gekennzeichnet, daß die Schürze (30) sich tangential vom Fußgehäuseteil erstreckt.

8. Folienspender nach Anspruch 6 oder 7, dadurch gekennzeichnet, daß die Schürze (30) mit einer Eingriffsöffnung (33) versehen ist.

9. Folienspender nach einem der vorhergehenden Ansprüche, dadurch gekennzeichnet, daß der dem Überlappungsbereich zwischen den Gehäuseteilen benachbart liegende Fußsteg (13) mit einer Abreißkante (32) ausgerüstet ist.

10. Folienspender nach einem der vorhergehenden Ansprüche, dadurch gekennzeichnet, daß die Fußstege (13) als zur Innenseite und zur Stirnseite des Gehäuses geöffnete Hohlstege ausgebildet sind.

11. Folienspender nach Anspruch 10, dadurch gekennzeichnet, daß in die Hohlstege Führungsleisten (14) eines Befestigungsfußes von Endkappen eingreifen und der Befestigungsfuß mit mindestens einem Rastmittel versehen ist, das in eine Rastaussparung des Fußgehäuseteils eingreift.

12. Folienspender nach Anspruch 11, dadurch gekennzeichnet, daß das Rastmittel des Befestigungsfußes als Zapfen (19) ausgebildet ist, der in der Betriebsstellung des Folienspenders in eine Bohrung (21) des Fußgehäuseteils und in der Stellung zum Einlegen der Folienrolle in ein Langloch (22) des Fußgehäuseteils (3) eingreift.

13. Folienspender nach einem der vorhergehenden Ansprüche, dadurch gekennzeichnet, daß die Endkappen konische, in die mittige Öffnung der Folienrolle einschwenkbare Zapfen aufweisen.

14. Folienspender nach Anspruch 13, dadurch gekennzeichnet, daß zwischen der Endkappe (23) und den in die hohlen Fußstege (13) eingreifenden Führungsleisten (25) ein materialelastisches Formteil (26) vorgesehen ist.

15. Folienspender nach Anspruch 1, bei dem das Gehäuse stirnseitig Endkappen aufweist, dadurch gekennzeichnet, daß die Endkappen (27,42) mit federnd angelenkten, mit den Endkappen einstückigen, in das mittige Rohr der Folienrolle eingreifenden Formteilen (28,44) versehen sind.

16. Folienspender nach Anspruch 15, dadurch gekennzeichnet, daß die Formteile (28,44) mit Grifföffnungen ausgerüstet sind.

17. Folienspender nach einem der vorhergehenden Ansprüche, dadurch gekennzeichnet, daß die Innenkante des Überlappungsbereichs (39) durch eine Rolle (40) gebildet wird.

18. Folienspender nach Anspruch 1, bei dem das Gehäuse stirnseitig Endkappen aufweist, dadurch gekennzeichnet, daß mittig in jeder Endkappe (48) ein Rollenhalter vorgesehen ist, der in der eingefahrenen Stellung durch Rastmittel festgelegt ist.

19. Folienspender nach Anspruch 18, dadurch gekennzeichnet, daß der Rollanhalter (49) außen einen Ringflansch (50) und innen einen Anschlagbund (51) aufweist.

20. Folienspender nach Anspruch 1, bei dem das Gehäuse stirnseitig Endkappen aufweist, dadurch gekennzeichnet, daß die Endkappen als am Umfang an mehreren Stellen mit dem Gehäuse verrastete Scheiben (52) ausgebildet sind.
